# EUROPÄISCHE PATENTSCHRIFT

(11) **EP 1 269 719 B1**
(45) Veröffentlichungstag und Bekanntmachung des Hinweises auf die Patenterteilung: **08.12.2004**
(21) Anmeldenummer: 01936073.4
(22) Anmeldetag: 14.03.2001
(51) Int. Cl.: H04L 29/06

(54) **KUNDENIDENTIFIZIERUNGSVERFAHREN FÜR PERSONALISIERBARE INTERNET PORTALE AUF BASIS DER RUFNUMMER**
CALL-NUMBER BASED CUSTOMER IDENTIFICATION METHOD FOR PERSONALIZABLE INTERNET PORTALS
PROCEDE D'IDENTIFICATION DE CLIENTS POUR PORTAILS INTERNET PERSONNALISABLES, SUR LA BASE DU NUMERO D'APPEL

(30) Priorität: 27.03.2000 DE 10015173
(43) Veröffentlichungstag der Anmeldung: 02.01.2003
(73) Patentinhaber: E-Plus Mobilfunk GmbH & Co. KG, 40468 Düsseldorf (DE)
(72) Erfinder: ERGEZINGER, Siegfried, 40822 Mettmann (DE); PLASSMANN, Dieter, 40235 Düsseldorf (DE)
(74) Vertreter: Beyer, Rudi
(86) Internationale Anmeldenummer: PCT/EP2001/002853
(87) Internationale Veröffentlichungsnummer: WO 2001/074026

(56) Entgegenhaltungen:
- WO-A-96/15612
- WO-A-99/27722

## Beschreibung

### Gattung

Die Erfindung betrifft ein Kundenidentifizierungsverfahren für personalisierbare Internet Portale.

### Stand der Technik

Um Kunden möglichst einfachen Zugang zu personalisierbaren Portal-Diensten zu ermöglichen, wird während der Dauer des Kundenbesuchs auf dem Portal eine Session angelegt. Durch Übertragung der sogenannten Session wird der Kunde durch einen sogenannten Cookie identifiziert. Ist dieser nicht vorhanden, erfolgt eine Authentifizierung mit Benutzername und Paßwortabfrage.

Dieses Verfahren ist nur bedingt sicher, da Cookies modifiziert werden können und damit Zugang auf fremde Daten erlangt werden kann. Die für eine sichere Kundenidentifizierung notwendige Authentifizierung durch Benutzername und Paßwortabfrage wird vom Kunden als lästig und kompliziert empfunden. Diese gilt insbesondere für das Mobilfunk-Umfeld, wo aufgrund der Einschränkungen mobiler Endgeräte nur vereinfachte Eingabemöglichkeiten bestehen. Weiterhin wird von einer Vielzahl von mobilen Endgeräten die Verwendung von Session ID und Cookies nicht unterstützt. Des weiteren stellt die Übertragung von langen Sessions IDs eine Performance Einschränkung bei den im Mobilfunk üblichen schmalbandigen Trägerdiensten dar.

Ein anderes System zur Zugangskontrolle eines Kommunikationssystems verwendet ein "caller ID inferface", wie beschrieben in WO 9 615 612.

### Aufgabe

Der Erfindung liegt die Aufgabe zugrunde, eine sichere und bequeme Identifizierung des Kunden zu ermöglichen.

### Lösung

Die Lösung ist in **Patentanspruch 1** beschrieben.

### Einige Vorteile

Das erfindungsgemäß vorgeschlagene Kundenidentifizierungsverfahren ermöglicht eine sichere und bequeme Identifizierung des Kunden ohne zusätzliche Eingabe von Benutzernamen und Paßwort. Es kann sowohl für Festnetzzugang als auch den mobilen Zugang angewendet werden. Dabei sind folgende Anwendungen denkbar:
- WEB / WAB Mail, Kalender, Addressbuch, Abgleich persönlicher Daten
- Personalisierte Portal Dienste (Netzbetreiber intern/extern mit ausgewählten Content Anbietern)
- E- und M-Commerce
- Mobile Banking

Bei dem erfindungsgemäßen Kundenidentifizierungsverfahren wird vom Endgerät die Rufnummer über das Zugangsnetz zu einem sogenannten Proxy-Server übertragen, welcher für die Protokoll-Umsetzung zwischen Zugangsnetz und Internet-(Intranet)Protokollen zuständig ist. In Abhängigkeit der Dienstanfrage (HTTP-Request) fügt der Proxy-Server eine Kunden-ID in die Dienstanfrage ein. Die Kunden-ID wird vom Proxy-Server aufgrund der MSISDN aus einem Kundenverzeichnis (z. B. LDAP) abgefragt. Als Alternative kann auch direkt die MSISDN verwendet werden.

Am Portal wird die ID der Dienstanfrage entnommen und mit einer Abfrage im Kundenverzeichnis die Berechtigung des Kunden geprüft. Ist diese gegeben, wird die Dienstanfrage des Kunden beantwortet. Dieser Mechanismus wird bei jeder weiteren Dienstabfrage des Kunden wiederholt. Bei der ersten Dienstanfrage wird zusätzlich eine Session angelegt, um temporäre Daten des Kunden speichern zu können. Als Session-ID wird die Kunden-ID (bzw. alternativ die MSISDN) verwendet. Erfolgt keine weitere Interaktion durch den Kunden wird die Session nach Ablauf eines Timers beendet.

### Weitere erfinderische Ausgestaltungen

Weitere erfinderische Ausgestaltungen sind in den **Patentansprüchen 2** bis **4** beschrieben.

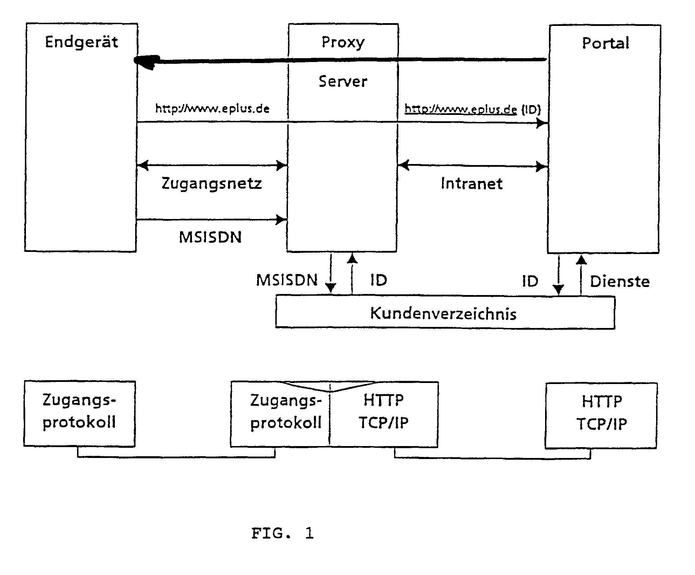

In der Zeichnung ist die Erfindung - teils schematisch - an einem Ausführungsbeispiel veranschaulicht.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Kundenidentifizierungsverfahren für personalisierbare Internet-Portale auf der Basis der anrufenden Teilnehmernummer, auch CLR oder Calling Line ID genannt, wobei vom Endgerät die Rufnummer über das Zugangsnetz zu einem ProxyServer übertragen wird, welcher für die Protokoll-Umsetzung zwischen Zugangsnetz und Internet-oder Intranet-Protokollen zuständig ist, wobei in Abhängigkeit von der Dienstanfrage in Form eines HTTP-Requests der Proxy-Server eine Kunden-ID in die Dienstanfrage einfügt, und daß die Kunden-ID vom Proxy-Server aufgrund der MSISDN aus einem Kundenverzeichnis abgefragt wird, woraufhin am Portal die ID der Dienstanfrage entnommen und mit einer Abfrage im Kundenverzeichnis die Berechtigung des Kunden geprüft wird, woraufhin die Dienstanfrage des Kunden beantwortet wird.

2. Verfahren nach Anspruch 1, **dadurch gekennzeichnet, daß** bei einer ersten Dienstanfrage zusätzlich eine Session angelegt wird, wobei Daten des Kunden gespeichert werden.

3. Verfahren nach Anspruch 1 oder 2, **dadurch gekennzeichnet, daß** als Sessions-ID die Kunden-ID oder alternativ die MSISDN verwendet wird.

4. Verfahren nach Anspruch 1 oder einem der darauffolgenden Ansprüche, **dadurch gekennzeichnet, daß** als Kundenverzeichnis LDAP verwendet wird.

## Claims

1. Method of customer identification for personalisable Internet portals on the basis of the calling subscriber number, also known as CLR or Calling Line ID, where the telephone number is transmitted from the terminal device via the access network to a proxy server which is responsible for protocol conversion between the access network and Internet or Intranet protocols, where, depending on the service enquiry in the form of an HTTP request, the proxy server inserts a customer ID into the service enquiry and the customer ID is queried in a customer directory by the proxy server on the basis of the MSISDN, after which the ID is taken from the service enquiry at the portal, the customer's authorisation checked by a query in the customer directory and the customer's service enquiry then answered.

2. Method in accordance with claim 1, **characterised in that** additionally, when an initial service enquiry is made, a session is set up, during which the customer's data are stored.

3. Method in accordance with claim 1 or 2, **characterised in that** the customer ID or alternatively the MSISDN is used as session ID.

4. Method in accordance with claim 1 or one of the claims following it, **characterised in that** LDAP is used as a customer directory.

## Revendications

1. Procédé d'identification de clients, pour portiques Internet pouvant être personnalisés sur la base du numéro de l'abonné appelant, appelé aussi identification CLR ou de la ligne appelante, le numéro appelé étant transmis par le terminal par l'intermédiaire du réseau d'accès à un serveur de procuration, assurant la conversion du protocole entre le réseau d'accès et les protocoles Internet ou intranet, le serveur de procuration insérant, en fonction de la demande de service, sous forme d'une requête http, un numéro d'identification du client dans la demande de service, le serveur de procuration recherchant le numéro d'identification du client sur la base du MSISDN dans une liste des clients, le numéro d'identification de la demande de service étant prélevé au niveau du portique et l'autorisation du client étant contrôlée par une recherche dans la liste des clients, une réponse étant ensuite accordée à la demande de service du client.

2. Procédé selon la revendication 1, **caractérisé en ce qu**'une première demande de service s'accompagne en outre d'une session au cours de laquelle les données du client sont enregistrées.

3. Procédé selon les revendications 1 ou 2, **caractérisé en ce que** le numéro d'identification du client ou le MSISDN est utilisé comme numéro d'identification de la session.

4. Procédé selon les revendications 1 ou l'une des revendications suivantes, **caractérisé en ce que** le LDAP est utilisé comme liste des clients.
